# EUROPEAN PATENT APPLICATION

(11) **EP 4 813 821 A1**
(43) Date of publication of application: **30.09.2026**
(21) Application number: 26167554.0
(22) Date of filing: 25.03.2026
(51) Int. Cl.: B62J 43/28, B62J 43/23, B62J 43/13, B62M 6/90, B62K 19/40, B62H 5/00, H01M 50/249, H01M 50/262

(54) **BATTERY LOCKING ASSEMBLY, FRAME TUBE BATTERY, AND FRAME TUBE MECHANISM**

(30) Priority: 26.03.2025 CN 202520562460 U
(71) Applicant: Guangdong Greenway Technology Co., Ltd, Dongguan, Guangdong 523127 (CN)
(72) Inventor: Tang, Guiqing, Dongguan City (CN); Ye, Guohua, Dongguan City (CN); Zhang, Zhiping, Dongguan City (CN); Wu, Liping, Dongguan City (CN)
(74) Representative: Lucidity IP Ltd

(57) **Abstract**

The present disclosure provides a battery locking assembly, a frame tube battery, and a frame tube mechanism. The battery locking assembly (110) includes a battery base (1110) and a stop limiting member (1120). The battery base is configured to be installed on an exterior of a battery body (120). The battery base has a combining surface (1101) configured to be locked with a fixed lock base (300) on a frame tube (200), such that the battery body is detachably loaded on the frame tube. The stop limiting member is installed on the combining surface and connected to the battery base. When the combining surface is unlocked from the fixed lock base, the stop limiting member is configured to approach and be locked to a locking structure of the fixed lock base, and the battery base moves relative to the fixed lock base, such that a pushing portion (1123) is exposed outside the fixed lock base.

## Description

### TECHNICAL FIELD

The present disclosure relates to the technical field of bicycle energy storage, and in particular to a battery locking assembly, a frame tube battery, and a frame tube mechanism.

### BACKGROUND

In electric bicycles, in order to prevent the battery on the frame tube of the bicycle from being stolen, most manufacturers use a frame tube battery assembly such as that disclosed in the Chinese patent document CN106080922A, to lock the battery in a recessed portion on the frame tube through a locking structure. However, due to the structural design of the frame tube, when the bicycle is in a standing state, the frame tube structure usually presents an obliquely disposed state. If a rider takes the battery at this time, he/she balances the vehicle body with one hand, and can only perform an unlocking operation on the locking structure with the other hand. After unlocking the locking structure, the battery easily falls from the oblique frame tube structure under the action of its own gravity, which will further cause inconvenience to the taking of the rider.

### SUMMARY

An object of the present disclosure is to overcome the deficiencies in the prior art, and to provide a battery locking assembly, a frame tube battery, and a frame tube mechanism which are more in line with actual use habits of a rider and more convenient for taking the battery body.

The object of the present disclosure is realized by the following technical solutions:

A battery locking assembly, comprising:

A battery base, the battery base is configured to be installed on an exterior of a battery body; the battery base has a combining surface, the combining surface is configured to be locked with a fixed lock base on a frame tube, such that the battery body is detachably loaded on the frame tube which is disposed obliquely;

The battery locking assembly further comprises a stop limiting member;

The stop limiting member is installed on the combining surface, and connected to the battery base; when the combining surface is unlocked from the fixed lock base, the stop limiting member is configured to approach and be locked to a locking structure of the fixed lock base, and the battery base moves relative to the fixed lock base, such that a pushing portion of the stop limiting member is exposed outside the fixed lock base; the pushing portion of the stop limiting member is configured to move away from and be disengaged from the locking structure on the fixed lock base during a secondary unlocking.

In some of the embodiments, a locking convex portion is formed on the stop limiting member, a part of the locking convex portion is disposed to protrude from the combining surface; the stop limiting member is locked to a locking position on the fixed lock base through the locking convex portion.

In some of the embodiments, the stop limiting member comprises a flexible portion, the locking convex portion, and the pushing portion connected in sequence; the flexible portion is fixedly connected to the battery base, and configured to be elastically deformed when the pushing portion moves.

In some of the embodiments, the battery base forms a storage accommodating groove on the combining surface, a part of the stop limiting member is movably disposed in the storage accommodating groove, a part of the locking convex portion is disposed to protrude outside the storage accommodating groove.

In some of the embodiments, an outer surface of the battery base forms a finger passing notch; the finger passing notch communicates with the storage accommodating groove, and is disposed opposite to a position of the pushing portion of the stop limiting member; and/or, The stop limiting member is slidingly abutted against a groove wall of the storage accommodating groove.

In some of the embodiments, the battery base forms a directional structure on the combining surface; the directional structure is configured to be concave-convex fitted with a guiding structure on the fixed lock base, such that the battery base moves relative to the fixed lock base along a guiding direction of the guiding structure.

In some of the embodiments, the directional structure is a guiding protrusion, a side of the guiding protrusion facing away from the guiding direction is configured to press against a resilient member in a guiding groove on the fixed lock base, such that the guiding protrusion moves along the guiding groove under pushing of the resilient member. A frame tube battery, comprising a battery body and the battery locking assembly according to any of the above embodiments; the battery base is installed on an exterior of the battery body. A frame tube mechanism, comprising a frame tube, a fixed lock base, and the frame tube battery according to any of the above embodiments; the fixed lock base is installed on the frame tube, the frame tube battery is detachably loaded on the frame tube which is disposed obliquely, the combining surface is locked with the fixed lock base; the stop limiting member is locked to a locking structure on the fixed lock base when the combining surface is unlocked from the fixed lock base.

In some of the embodiments, the frame tube mechanism further comprises a fixed base; the fixed base is installed on the frame tube; an end of the frame tube battery far away from the fixed lock base is detachably fitted with the fixed base; the fixed base convexly provides a guiding rotation supporting portion toward the frame tube battery; the guiding rotation supporting portion abuts against the frame tube battery, and serves as a rotation center when the frame tube battery is detached from the frame tube; and/or, The fixed lock base comprises a lock body and a fixed base body, the locking structure is connected to the fixed base body, the battery base forms a lock groove on the combining surface, the lock body is installed on the fixed base body; a lock tongue of the lock body is configured to be inserted into the lock groove, such that the combining surface and the fixed lock base are locked, or a lock tongue of the lock body is configured to be disengaged from the lock groove, such that the combining surface and the fixed lock base are unlocked. Compared with the prior art, the present disclosure has at least the following advantages:

1. Since the combining surface locks the battery body to be detachably loaded on the obliquely disposed frame tube by locking with the fixed lock base on the frame tube, and the stop limiting member is installed on the combining surface, before the battery base and the fixed lock base are primarily unlocked, the stop limiting member does not contact the fixed lock base, such that after the combining surface is unlocked from the fixed lock base, the stop limiting member can approach and be locked to the locking structure on the fixed lock base, thereby forming an interference effect between the stop limiting member and the locking structure, and then the self-weight of the battery body can be overcome by the interference effect, such that the battery body can still be kept on the frame tube, and finally the situation where the battery body falls from the frame tube during the primary unlocking is reduced.

2. After the combining surface is unlocked from the fixed lock base, the battery base can move relative to the fixed lock base, such that the pushing portion of the stop limiting member is exposed outside the fixed lock base. When the bicycle is in the standing state, the rider can more conveniently contact and trigger the pushing portion with one hand to secondarily unlock the battery base and the fixed lock base, for example, pushing the pushing portion of the stop limiting member with a finger, such that the stop limiting member moves away from and is disengaged from the locking structure on the fixed lock base. After that, the battery body can be stably taken off the frame tube under the supporting action of the human hand. The above battery locking assembly is more in line with the actual use habits of the rider, and can effectively improve the convenience when taking the battery body.

### BRIEF DESCRIPTION OF THE DRAWINGS

In order to more clearly illustrate the technical solutions in the embodiments of the present disclosure, the accompanying drawings required to be used in the embodiments will be briefly introduced below. It should be understood that the following drawings merely show certain embodiments of the present disclosure, and therefore should not be regarded as a limitation on the scope. For a person of ordinary skill in the art, other related drawings can also be obtained according to these drawings without creative efforts.
FIG. 1 is a schematic diagram of a separated state between a battery locking assembly and a fixed lock base according to an embodiment of the present disclosure;
FIG. 2 is a schematic diagram of a state of the battery locking assembly shown in FIG. 1 when operated by a human hand;
FIG. 3 is a cross-sectional view of a state of the battery locking assembly shown in FIG. 2 after being operated by a human hand;
FIG. 4 is a partially enlarged view shown at A in FIG. 3;

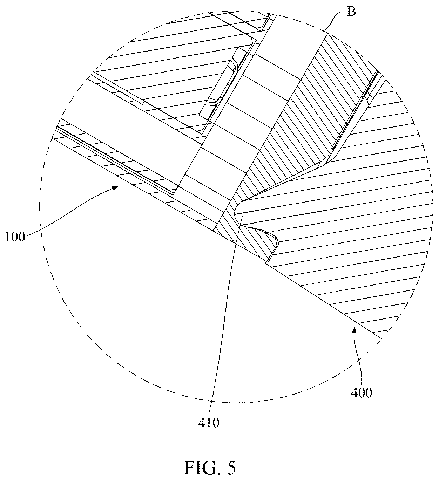

FIG. 5 is a partially enlarged view shown at B in FIG. 3.

Reference numerals: 10, human hand; 100, frame tube battery; 110, battery locking assembly; 1110, battery base; 1111, guiding protrusion; 1101, combining surface; 1103, lock groove; 1104, storage accommodating groove; 1105, finger passing notch; 1120, stop limiting member; 1121, flexible portion; 1122, locking convex portion; 1123, pushing portion; 120, battery body; 200, frame tube; 300, fixed lock base; 310, lock body; 3110, lock tongue; 320, fixed base body; 3210, locking position; 3201, guiding groove; 3211, resilient member; 400, fixed base; 410, guiding rotation supporting portion..

### DETAILED DESCRIPTION

In order to facilitate the understanding of the present disclosure, the present disclosure will be described more fully below with reference to the related accompanying drawings. Preferred embodiments of the present disclosure are given in the drawings. However, the present disclosure may be embodied in many different forms and is not limited to the embodiments described herein. Conversely, the purpose of providing these embodiments is to make the understanding of the disclosure content of the present disclosure more thorough and comprehensive.

It should be noted that when an element is referred to as being "fixed to" another element, it can be directly on the other element or intervening elements may also be present. When an element is considered to be "connected" to another element, it can be directly connected to the other element or intervening elements may possibly be present simultaneously. The terms "vertical", "horizontal", "left", "right" and similar expressions used herein are for illustrative purposes only, and do not represent that they are the only embodiments.

Unless otherwise defined, all technical and scientific terms used herein have the same meaning as commonly understood by a person skilled in the technical field to which the present disclosure belongs. The terms used herein in the specification of the present disclosure are merely for the purpose of describing specific embodiments, and are not intended to limit the present disclosure. The term "and/or" used herein comprises any and all combinations of one or more related listed items.

In order to better understand the technical solutions and beneficial effects of the present disclosure, the present disclosure is further described in detail below with reference to specific embodiments:

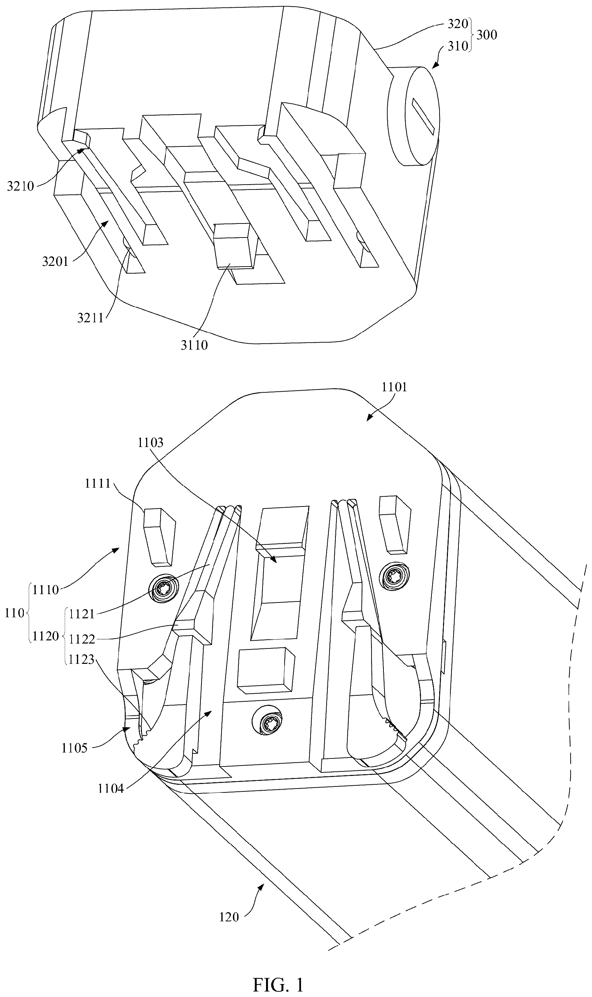

Please refer to FIG. 1. A battery locking assembly 110 of an embodiment comprises a battery base 1110 and a stop limiting member 1120; the battery base 1110 is configured to be installed on an exterior of a battery body 120; the battery base 1110 has a combining surface 1101, the combining surface 1101 is configured to be locked with a fixed lock base 300 on a frame tube 200, such that the battery body 120 is detachably loaded on the frame tube 200 which is disposed obliquely; the stop limiting member 1120 is installed on the combining surface 1101, and connected to the battery base 1110; when the combining surface 1101 is unlocked from the fixed lock base 300, the stop limiting member 1120 is configured to approach and be locked to a locking structure of the fixed lock base 300, and the battery base 1110 moves relative to the fixed lock base 300, such that a pushing portion 1123 of the stop limiting member 1120 is exposed outside the fixed lock base 300; the pushing portion 1123 of the stop limiting member 1120 is configured to move away from and be disengaged from the locking structure on the fixed lock base 300 during a secondary unlocking.

It can be understood that, since the combining surface 1101 locks the battery body 120 to be detachably loaded on the obliquely disposed frame tube 200 by locking with the fixed lock base 300 on the frame tube 200, and the stop limiting member 1120 is installed on the combining surface 1101, before the battery base 1110 and the fixed lock base 300 are primarily unlocked, the stop limiting member 1120 does not contact the fixed lock base 300, such that after the combining surface 1101 is unlocked from the fixed lock base 300, the stop limiting member 1120 can approach and be locked to the locking structure on the fixed lock base 300, thereby forming an interference effect between the stop limiting member 1120 and the locking structure, and then the self-weight of the battery body 120 can be overcome by the interference effect, such that the battery body 120 can still be kept on the frame tube 200, and finally the situation where the battery body 120 falls from the frame tube 200 during the primary unlocking is reduced.

It can be understood that, after the combining surface 1101 is unlocked from the fixed lock base 300, the battery base 1110 can move relative to the fixed lock base 300, such that the pushing portion 1123 of the stop limiting member 1120 is exposed outside the fixed lock base 300. When the bicycle is in the standing state, the rider can more conveniently contact and trigger the pushing portion 1123 with one hand to secondarily unlock the battery base 1110 and the fixed lock base 300, for example, pushing the pushing portion 1123 of the stop limiting member 1120 with a finger, such that the stop limiting member 1120 moves away from and is disengaged from the locking structure on the fixed lock base 300. After that, the battery body 120 can be stably taken off the frame tube 200 under the supporting action of the human hand 10. The above battery locking assembly 110 is more in line with the actual use habits of the rider, and can effectively improve the convenience when taking the battery body 120. In one of the embodiments, the locking structure on the fixed lock base 300 can be different structures such as a locking slot, a locking position 3210, or a locking block, which are merely for example illustration here. Specifically, a person skilled in the art can also make other choices according to needs.

In some of the embodiments, a position on the stop limiting member 1120 far away from the pushing portion 1123 is rotationally connected to the battery base 1110 through a rotating shaft. It can be understood that, since the battery base 1110 and the position on the stop limiting member 1120 far away from the pushing portion 1123 are connected through the rotating shaft, when a finger pushes the pushing portion 1123 of the stop limiting member 1120, the stop limiting member 1120 can swing around the rotating shaft as a center under the action of a thrust, such that the stop limiting member 1120 stably moves and is disengaged from the locking structure on the fixed lock base 300.

Please refer to FIG. 1. In some of the embodiments, a locking convex portion 1122 is formed on the stop limiting member 1120, a part of the locking convex portion 1122 is disposed to protrude from the combining surface 1101; the stop limiting member 1120 is locked to a locking position 3210 on the fixed lock base 300 through the locking convex portion 1122. It can be understood that, since the part of the locking convex portion 1122 formed on the stop limiting member 1120 is disposed to protrude from the combining surface 1101, when the combining surface 1101 is unlocked from the fixed lock base 300, it can be locked to the locking position 3210 on the fixed lock base 300 through the locking convex portion 1122, such that an interference effect is formed between the stop limiting member 1120 and the locking position 3210, which can then better overcome the self-weight of the battery body 120, to reduce the situation where the battery body 120 falls when being taken. In this embodiment, when the locking convex portion 1122 is locked to the locking position 3210 on the fixed lock base 300, the locking convex portion 1122 and the locking position 3210 on the fixed lock base 300 are disposed oppositely in position, and when the locking convex portion 1122 is disengaged from the locking position 3210 on the fixed lock base 300, the locking convex portion 1122 and the locking position 3210 on the fixed lock base 300 are disposed staggered in position.

Please refer to FIG. 1. In some of the embodiments, the stop limiting member 1120 comprises a flexible portion 1121, the locking convex portion 1122, and the pushing portion 1123 connected in sequence; the flexible portion 1121 is fixedly connected to the battery base 1110, and configured to be elastically deformed when the pushing portion 1123 moves. It can be understood that, by making the flexible portion 1121 of the stop limiting member 1120 fixedly connected to the battery base 1110, when a finger dials the pushing portion 1123 to move, the pushing portion 1123 can conduct the thrust to the flexible portion 1121, such that the flexible portion 1121 is elastically deformed and moves relative to the battery base 1110, and because the locking convex portion 1122 is located between the flexible portion 1121 and the pushing portion 1123, when the flexible portion 1121 and the pushing portion 1123 move, the stop limiting member 1120 can be displaced as a whole, thereby enabling the locking convex portion 1122 to switch between a position opposite to the locking position 3210 on the fixed lock base 300 and a position staggered with the locking position 3210 on the fixed lock base 300, and after the finger is disengaged from the pushing portion 1123, the flexible portion 1121 can recover under the action of an elastic deformation force, such that the stop limiting member 1120 automatically resets as a whole. Please refer to FIG. 1. In some of the embodiments, the battery base 1110 forms a storage accommodating groove 1104 on the combining surface 1101, a part of the stop limiting member 1120 is movably disposed in the storage accommodating groove 1104, a part of the locking convex portion 1122 is disposed to protrude outside the storage accommodating groove 1104. It can be understood that, since the part of the stop limiting member 1120 is movably disposed in the storage accommodating groove 1104, the part of the stop limiting member 1120 can be stored through the storage accommodating groove 1104, to reduce the space occupation of the stop limiting member 1120 and enhance the structural compactness of the battery base 1110. At the same time, the part of the locking convex portion 1122 is disposed to protrude outside the storage accommodating groove 1104, such that it can be locked to the locking position 3210 on the fixed lock base 300 through the locking convex portion 1122. At this time, the active range of the stop limiting member 1120 is limited through the storage accommodating groove 1104, reducing the occurrence of a situation where the stop limiting member 1120 is broken due to a large-range activity during the process of the locking convex portion 1122 being disengaged from the locking position 3210 on the fixed lock base 300 caused by an excessive force of the finger.

Please refer to FIG. 1. In some of the embodiments, an outer surface of the battery base 1110 forms a finger passing notch 1105; the finger passing notch 1105 communicates with the storage accommodating groove 1104, and is disposed opposite to a position of the pushing portion 1123 of the stop limiting member 1120. It can be understood that, since the finger passing notch 1105 formed on the outer surface of the battery base 1110 is opposite to the position of the pushing portion 1123 of the stop limiting member 1120, and is disposed in communication with the storage accommodating groove 1104, the rider's finger can conveniently pass through the finger passing notch 1105 to dial the pushing portion 1123, so as to further improve the convenience of one-handed operation.

Please refer to FIG. 1. In some of the embodiments, a damping structure is formed on the pushing portion 1123, the damping structure is disposed toward the finger passing notch 1105, and the damping structure is configured to contact finger skin. It can be understood that, when the finger pushes the pushing portion 1123, the contact of the finger skin with the damping structure can increase the contact friction during the finger pinching and releasing, making it more convenient for the finger to exert force, and further improving the stability of taking and placing the battery body 120 with one hand. Specifically, the damping structure can have a concave-convex shape such as a sawtooth shape or a wavy shape, which are merely for example illustration here. Specifically, a person skilled in the art can also make other choices according to needs.

Please refer to FIG. 1. In some of the embodiments, the stop limiting member 1120 is slidingly abutted against a groove wall of the storage accommodating groove 1104. It can be understood that, since the stop limiting member 1120 is slidingly abutted against the groove wall of the storage accommodating groove 1104, the stop limiting member 1120 can be contacted through the groove wall of the storage accommodating groove 1104, such that when the human hand 10 dials the pushing portion 1123, the stop limiting member 1120 can slide close to the groove wall of the storage accommodating groove 1104 as a whole, thereby ensuring that the stop limiting member 1120 is displaced smoothly as a whole.

Please refer to FIG. 1. In some of the embodiments, the battery base 1110 forms a directional structure on the combining surface 1101; the directional structure is configured to be concave-convex fitted with a guiding structure on the fixed lock base 300, such that the battery base 1110 moves relative to the fixed lock base 300 along a guiding direction of the guiding structure.

It can be understood that, since the directional structure on the combining surface 1101 is concave-convex fitted with the guiding structure on the fixed lock base 300, the moving path of the directional structure can be limited by the interference effect formed between the directional structure and the guiding structure, thereby reducing the movement direction offset of the battery base 1110 when disengaged from the fixed lock base 300, and finally making the battery base 1110 stably disengaged from the fixed lock base 300 along the guiding direction of the guiding structure.

Please refer to FIG. 1. In some of the embodiments, the directional structure is a guiding protrusion 1111, a side of the guiding protrusion 1111 facing away from the guiding direction is configured to press against a resilient member 3211 in a guiding groove 3201 on the fixed lock base 300, such that the guiding protrusion 1111 moves along the guiding groove 3201 under pushing of the resilient member 3211. It can be understood that, by making a side of the guiding protrusion 1111 facing away from the grabbing portion press against the resilient member 3211 in the guiding groove 3201 on the fixed lock base 300, when the combining surface 1101 is unlocked from the fixed lock base 300, the guiding protrusion 1111 can move toward the human hand 10 along the guiding groove 3201 under the elastic force of the resilient member 3211, to further improve the convenience of taking the battery body 120 with one hand. In this embodiment, the guiding protrusion 1111 is disposed opposite to the pushing portion 1123, and when the human hand 10 triggers the pushing portion 1123 to perform the secondary unlocking, the acting force of the resilient member 3211 on the guiding protrusion 1111 is directed toward the human hand 10, which can enable the battery base 1110 to enter the human hand 10 under the action of the resilient member 3211.

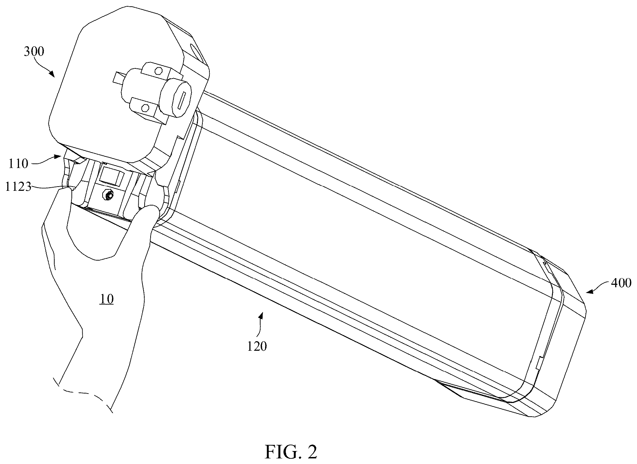

Please refer to FIG. 1 to FIG. 3. The present disclosure further provides a frame tube battery 100, comprising a battery body 120 and the battery locking assembly 110 according to any of the above embodiments; the battery base 1110 is installed on an exterior of the battery body 120. It can be understood that, by applying the battery locking assembly 110 of the present disclosure to the frame tube battery 100, since the combining surface 1101 locks the battery body 120 to be detachably loaded on the frame tube 200 by locking with the fixed lock base 300 on the frame tube 200, and the stop limiting member 1120 is installed on the combining surface 1101, after the combining surface 1101 is unlocked from the fixed lock base 300, it can be locked to the locking structure on the fixed lock base 300 through the stop limiting member 1120, thereby forming an interference effect between the stop limiting member 1120 and the locking structure, and then the self-weight of the battery body 120 can be overcome by the interference effect, such that the battery body 120 can still be kept on the frame tube 200, and finally the situation where the battery body 120 falls when being taken is reduced. Furthermore, after the combining surface 1101 is unlocked from the fixed lock base 300, the battery base 1110 can move relative to the fixed lock base 300, such that the pushing portion 1123 of the stop limiting member 1120 is exposed outside the fixed lock base 300. When the bicycle is in the standing state, the rider can more conveniently contact and trigger the pushing portion 1123 with one hand to secondarily unlock the battery base 1110 and the fixed lock base 300, for example, pushing the pushing portion 1123 of the stop limiting member 1120 with a finger, such that the stop limiting member 1120 moves away from and is disengaged from the locking structure on the fixed lock base 300. After that, the battery body 120 can be stably taken off the frame tube 200 under the supporting action of the human hand 10.

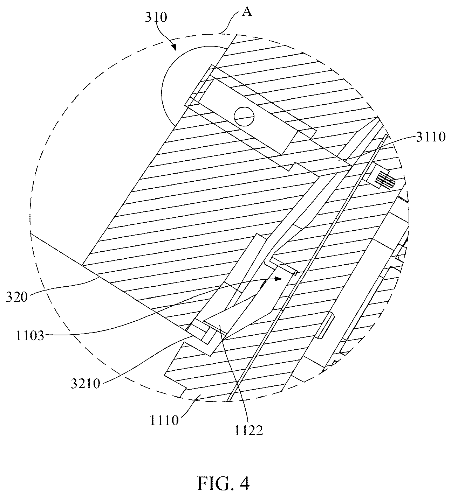

Please refer to FIG. 1 to FIG. 3. The present disclosure additionally provides a frame tube mechanism, comprising a frame tube 200, a fixed lock base 300, and the frame tube battery 100 according to any of the above embodiments; the fixed lock base 300 is installed on the frame tube 200, the frame tube battery 100 is detachably loaded on the frame tube 200 which is disposed obliquely, the combining surface 1101 is locked with the fixed lock base 300; the stop limiting member 1120 is locked to a locking structure on the fixed lock base 300 when the combining surface 1101 is unlocked from the fixed lock base 300. It can be understood that, please refer to FIG. 4, since the stop limiting member 1120 is locked to the locking structure on the fixed lock base 300 when the combining surface 1101 is unlocked from the fixed lock base 300, an interference effect is formed between the stop limiting member 1120 and the locking structure, and then the self-weight of the battery body 120 can be overcome by the interference effect, such that the frame tube battery 100 can still be kept on the frame tube 200, and finally the situation where the battery body 120 falls from the frame tube 200 during the primary unlocking is reduced.

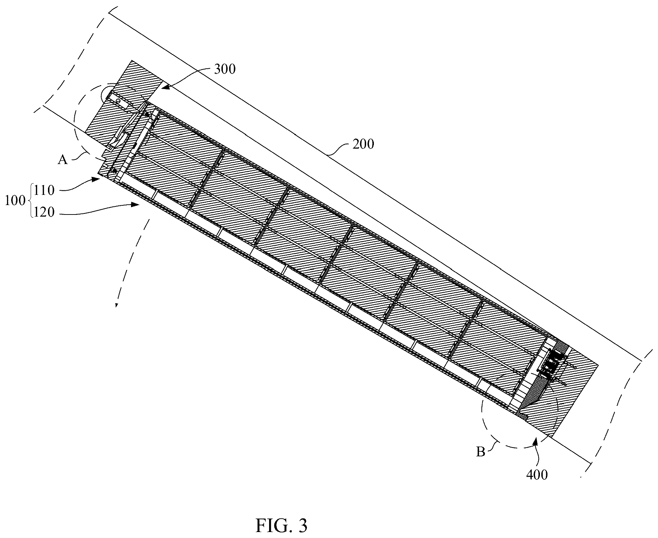

Please refer to FIG. 3 and FIG. 4. In some of the embodiments, the frame tube mechanism further comprises a fixed base 400; the fixed base 400 is installed on the frame tube 200; an end of the frame tube battery 100 far away from the fixed lock base 300 is detachably fitted with the fixed base 400; the fixed base 400 convexly provides a guiding rotation supporting portion 410 toward the frame tube battery 100; the guiding rotation supporting portion 410 abuts against the frame tube battery 100, and serves as a rotation center when the frame tube battery 100 is detached from the frame tube 200. It can be understood that, by detachably fitting the fixed base 400 to the end of the frame tube battery 100 far away from the fixed lock base 300, and the combining surface 1101 of the battery base 1110 being locked with the fixed lock base 300, the frame tube battery 100 can be detachably loaded on the frame tube 200, and by making the guiding rotation supporting portion 410 of the fixed base 400 abut against the frame tube battery 100, the frame tube battery 100 can be flipped and detached from the frame tube 200 taking the guiding rotation supporting portion 410 as a rotation center when the combining surface 1101 is unlocked from the fixed lock base 300, which can better adapt to the process of detaching the frame tube battery 100 with one hand. In this embodiment, the guiding rotation supporting portion 410 is located at an edge of a side of the fixed base 400 far away from the frame tube 200, and tilts toward a direction facing away from the frame tube 200 to form an arc-shaped base portion, and the arc-shaped base portion is configured to slidingly abut against the frame tube battery 100. It can be understood that, a smooth contact surface can be formed by the arc-shaped base portion abutting against the frame tube battery 100, such that the frame tube battery 100 can slide relative to the arc-shaped base portion to be smoothly detached from the frame tube 200.

Please refer to FIG. 1 and FIG. 4. In some of the embodiments, the fixed lock base 300 comprises a lock body 310 and a fixed base body 320, the lock body 310 is installed on the fixed base body 320, the battery base 1110 forms a lock groove 1103 on the combining surface 1101; a lock tongue 3110 of the lock body 310 is configured to be inserted into the lock groove 1103, such that the combining surface 1101 and the fixed base body 320 are locked, or a lock tongue 3110 of the lock body 310 is configured to be disengaged from the lock groove 1103, such that the combining surface 1101 and the fixed base body 320 are unlocked. It can be understood that, since the lock body 310 is installed on the fixed base body 320, and the battery base 1110 forms the lock groove 1103 on the combining surface 1101, the lock tongue 3110 of the lock body 310 can be inserted into the lock groove 1103, such that the combining surface 1101 and the fixed base body 320 are locked, that is, the fixed lock base 300 is locked to the combining surface 1101. Moreover, the lock tongue 3110 of the lock body 310 is made to be disengaged from the lock groove 1103, such that the combining surface 1101 and the fixed base body 320 are unlocked, that is, the fixed lock base 300 and the combining surface 1101 are unlocked. Wherein, the lock body 310 can be a conventional lock, which will not be repeated here. When unlocking, a key is inserted into a keyhole of the lock body 310, so as to drive the lock tongue 3110 to be disengaged from the lock groove 1103 through the key, separating the lock tongue 3110 from the battery base 1110, and finally realizing the unlocking of the fixed lock base 300 and the combining surface 1101.

Compared with the prior art, the present disclosure has at least the following advantages:

Since the combining surface 1101 locks the battery body 120 to be detachably loaded on the obliquely disposed frame tube 200 by locking with the fixed lock base 300 on the frame tube 200, and the stop limiting member 1120 is installed on the combining surface 1101, before the battery base 1110 and the fixed lock base 300 are primarily unlocked, the stop limiting member 1120 does not contact the fixed lock base 300, such that after the combining surface 1101 is unlocked from the fixed lock base 300, the stop limiting member 1120 can approach and be locked to the locking structure on the fixed lock base 300, thereby forming an interference effect between the stop limiting member 1120 and the locking structure, and then the self-weight of the battery body 120 can be overcome by the interference effect, such that the battery body 120 can still be kept on the frame tube 200, and finally the situation where the battery body 120 falls from the frame tube 200 during the primary unlocking is reduced.

After the combining surface 1101 is unlocked from the fixed lock base 300, the battery base 1110 can move relative to the fixed lock base 300, such that the pushing portion 1123 of the stop limiting member 1120 is exposed outside the fixed lock base 300. When the bicycle is in the standing state, the rider can more conveniently contact and trigger the pushing portion 1123 with one hand to secondarily unlock the battery base 1110 and the fixed lock base 300, for example, pushing the pushing portion 1123 of the stop limiting member 1120 with a finger, such that the stop limiting member 1120 moves away from and is disengaged from the locking structure on the fixed lock base 300. After that, the battery body 120 can be stably taken off the frame tube 200 under the supporting action of the human hand 10. The above battery locking assembly 110 is more in line with the actual use habits of the rider, and can effectively improve the convenience when taking the battery body 120.

The above-mentioned embodiments only express several implementation modes of the present disclosure, and the descriptions thereof are relatively specific and detailed, but they should not be thereby understood as a limitation on the scope of the utility model patent. It should be pointed out that for a person of ordinary skill in the art, several modifications and improvements can also be made without departing from the concept of the present disclosure, and these all fall within the protection scope of the present disclosure. Therefore, the protection scope of the patent of the present disclosure shall be subject to the appended claims.

## Claims

1. A battery locking assembly, comprising:
a battery base, wherein the battery base is configured to be installed on an exterior of a battery body; the battery base has a combining surface, and the combining surface is configured to be locked with a fixed lock base on a frame tube, such that the battery body is detachably loaded on the frame tube which is disposed obliquely;
**characterized in that**, the battery locking assembly further comprises a stop limiting member;
the stop limiting member is installed on the combining surface, and connected to the battery base; when the combining surface is unlocked from the fixed lock base, the stop limiting member is configured to approach and be locked to a locking structure of the fixed lock base, and the battery base moves relative to the fixed lock base, such that a pushing portion of the stop limiting member is exposed outside the fixed lock base; and the pushing portion of the stop limiting member is configured to move away from and be disengaged from the locking structure on the fixed lock base during a secondary unlocking.

2. The battery locking assembly according to claim 1, **characterized in that**, a locking convex portion is formed on the stop limiting member, and a part of the locking convex portion is disposed to protrude from the combining surface; and the stop limiting member is locked to a locking position on the fixed lock base through the locking convex portion.

3. The battery locking assembly according to claim 2, **characterized in that**, the stop limiting member comprises a flexible portion, the locking convex portion, and the pushing portion connected in sequence; and the flexible portion is fixedly connected to the battery base, and configured to be elastically deformed when the pushing portion moves.

4. The battery locking assembly according to claim 2, **characterized in that**, the battery base forms a storage accommodating groove on the combining surface, a part of the stop limiting member is movably disposed in the storage accommodating groove, and a part of the locking convex portion is disposed to protrude outside the storage accommodating groove.

5. The battery locking assembly according to claim 4, **characterized in that**, an outer surface of the battery base forms a finger passing notch; the finger passing notch communicates with the storage accommodating groove, and is disposed opposite to a position of the pushing portion of the stop limiting member; and/or,
the stop limiting member is slidingly abutted against a groove wall of the storage accommodating groove.

6. The battery locking assembly according to any of claims 1 to 5, **characterized in that**, the battery base forms a directional structure on the combining surface; and the directional structure is configured to be concave-convex fitted with a guiding structure on the fixed lock base, such that the battery base moves relative to the fixed lock base along a guiding direction of the guiding structure; and optionally
**characterized in that**, the directional structure is a guiding protrusion, and a side of the guiding protrusion facing away from the guiding direction is configured to press against a resilient member in a guiding groove on the fixed lock base, such that the guiding protrusion moves along the guiding groove under pushing of the resilient member.

7. A frame tube battery, **characterized in that**, comprising a battery body and the battery locking assembly according to claim 1; and the battery base is installed on an exterior of the battery body.

8. The frame tube battery according to claim 7, **characterized in that**, a locking convex portion is formed on the stop limiting member, and a part of the locking convex portion is disposed to protrude from the combining surface; and the stop limiting member is locked to a locking position on the fixed lock base through the locking convex portion.

9. The frame tube battery according to claim 8, **characterized in that**, the stop limiting member comprises a flexible portion, the locking convex portion, and the pushing portion connected in sequence; and the flexible portion is fixedly connected to the battery base, and configured to be elastically deformed when the pushing portion moves.

10. The frame tube battery according to claim 8, **characterized in that**, the battery base forms a storage accommodating groove on the combining surface, a part of the stop limiting member is movably disposed in the storage accommodating groove, and a part of the locking convex portion is disposed to protrude outside the storage accommodating groove.

11. The frame tube battery according to claim 10, **characterized in that**, an outer surface of the battery base forms a finger passing notch; the finger passing notch communicates with the storage accommodating groove, and is disposed opposite to a position of the pushing portion of the stop limiting member; and/or,
the stop limiting member is slidingly abutted against a groove wall of the storage accommodating groove.

12. The frame tube battery according to any of claims 7 to 11, **characterized in that**, the battery base forms a directional structure on the combining surface; and the directional structure is configured to be concave-convex fitted with a guiding structure on the fixed lock base, such that the battery base moves relative to the fixed lock base along a guiding direction of the guiding structure.

13. The frame tube battery according to claim 12, **characterized in that**, the directional structure is a guiding protrusion, and a side of the guiding protrusion facing away from the guiding direction is configured to press against a resilient member in a guiding groove on the fixed lock base, such that the guiding protrusion moves along the guiding groove under pushing of the resilient member.

14. A frame tube mechanism, **characterized in that**, comprising a frame tube, a fixed lock base, and the frame tube battery according to any of claims 7 to 13; the fixed lock base is installed on the frame tube, the frame tube battery is detachably loaded on the frame tube which is disposed obliquely, and the combining surface is locked with the fixed lock base; and the stop limiting member is locked to a locking structure on the fixed lock base when the combining surface is unlocked from the fixed lock base.

15. The frame tube mechanism according to claim 14, **characterized in that**, the frame tube mechanism further comprises a fixed base; the fixed base is installed on the frame tube; an end of the frame tube battery far away from the fixed lock base is detachably fitted with the fixed base; the fixed base convexly provides a guiding rotation supporting portion toward the frame tube battery; the guiding rotation supporting portion abuts against the frame tube battery, and serves as a rotation center when the frame tube battery is detached from the frame tube; and/or,
the fixed lock base comprises a lock body and a fixed base body, the locking structure is connected to the fixed base body, the battery base forms a lock groove on the combining surface, and the lock body is installed on the fixed base body; and a lock tongue of the lock body is configured to be inserted into the lock groove, such that the combining surface and the fixed lock base are locked, or the lock tongue of the lock body is configured to be disengaged from the lock groove, such that the combining surface and the fixed lock base are unlocked.
